(19) Europäisches Patentamt
European Patent Office
Office européen des brevets

(11) EP 0 482 451 B1

(12) **EUROPÄISCHE PATENTSCHRIFT**

(45) Veröffentlichungstag und Bekanntmachung des Hinweises auf die Patenterteilung:
**03.04.1996 Patentblatt 1996/14**

(51) Int Cl.[6]: **C08L 69/00**, C08L 67/03, C08K 5/49

(21) Anmeldenummer: **91117357.3**

(22) Anmeldetag: **11.10.1991**

(54) **Lichtalterungsbeständige, flammwidrige Polycarbonat-, Polyestercarbonat- oder Polyarylat-Formmassen**

Stable to aging-by-light, flame-retardant polycarbonate, polyestercarbonate or polyarylate moulding compositions

Masses de moulage de polycarbonate, de polyestercarbonate ou de polyarylate, ignifuges et stables à la lumière

(84) Benannte Vertragsstaaten:
**DE ES FR GB IT NL**

(30) Priorität: **24.10.1990 DE 4033806**

(43) Veröffentlichungstag der Anmeldung:
**29.04.1992 Patentblatt 1992/18**

(73) Patentinhaber: **BAYER AG**
**D-51368 Leverkusen (DE)**

(72) Erfinder:
- **Wittman, Dieter, Dr.**
  **W-5000 Köln 80 (DE)**
- **Schoeps, Jochen, Dr.**
  **W-4150 Krefeld (DE)**
- **Urbanneck, Bernd**
  **W-4050 Mönchengladbach 2 (DE)**
- **Huff, Karl, Dr.**
  **W-4047 Dormagen 1 (DE)**
- **Ott, Karl-Heinz, Dr.**
  **W-5090 Leverkusen 1 (DE)**
- **Peters, Horst, Dr.**
  **W-5090 Leverkusen 3 (DE)**

(56) Entgegenhaltungen:
**EP-A- 0 286 965** **EP-A- 0 315 868**
**EP-A- 0 320 836** **EP-A- 0 345 522**

- **Chemical Abstracts Vol. 77; 1972; 89442F**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 482 451 B1

Printed by Jouve, 75001 PARIS (FR)

## Beschreibung

Gegenstand der Erfindung sind thermoplastische Formmassen, enthaltend

A) 30 bis 97 Gew.-% - bezogen auf A + B + C - vorzugsweise 40 bis 96 Gew.-%, besonders bevorzugt 50 bis 95 Gew.-%, thermoplastisches, aromatisches Polycarbonat, aromatisches Polyestercarbonat, aromatischen Polyester oder Mischungen davon,

B) 3 bis 30 Gew.-% - bezogen auf A + B + C - vorzugsweise 4 bis 20 Gew.-%, besonders bevorzugt 5 bis 15 Gew.-%, Pfropfpolymerisat aus

B.1 40 bis 90 Gew.-% eines wenigstens partiell vernetzten, teilchenförmigen Dienkautschuks eines mittleren Teilchendurchmessers ($d_{50}$) von 0,05 µm bis 2,0 µm, vorzugsweise 0,1 bis 0,6 µm, und

B.2 60 bis 10 Gew.-% Styrol, Acrylnitril, Methylmethacrylat oder Mischungen daraus, hergestellt durch Emulsionspfropfpolymerisation mit einem Initiator aus cumolhydroperoxid oder tert.-Butylhydroperoxid und Ascorbinsäure, zur Erzielung einer Pfropfausbeute von > 60 Gew.-%, vorzugsweise > 75 Gew.-%, der Monomeren B.2, und zusätzlich

C) 0 bis 40 Gew.-% - bezogen auf A + B + C - vorzugsweise 1 bis 30 Gew.-%, besonders bevorzugt 5 bis 25 Gew.-%, thermoplastisches Harz, welches

C.1 ein thermoplastisches Copolymerisat aus

C.1.1 50 bis 95 Gew.-% Styrol, α-Methylstyrol, kernsubstituiertem Styrol, Methylmethacrylat oder Mischungen daraus, und

C.1.2 50 bis 5 Gew.-% Acrylnitril, Methacrylnitril, Methylmethacrylat, Maleinsäureanhydrid, N-substituiertem Maleinimid oder Mischungen daraus,

oder

C.2 ein Polyalkylenterephthalat ist,

D) 1 bis 20 Gew.-Teile, vorzugsweise 2 bis 15 Gew.-Teile, besonders bevorzugt 3 bis 12 Gew.-Teile, pro 100 Gew.-Teile A + B + C, einer Phosphorverbindung der Formel (I)

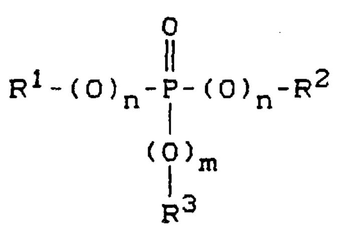

(I

worin

| | |
|---|---|
| $R^1$, $R^2$ und $R^3$ | unabhängig voneinander gegebenenfalls halogeniertes $C_1$-$C_8$-Alkyl oder gegebenenfalls halogeniertes und/oder alkyliertes $C_6$-$C_{20}$-Aryl, |
| m | Null oder 1 und |
| n | Null oder 1 bedeuten. |

E) 0,05 bis 5 Gew.-Teile, vorzugsweise 0,1 bis 1 Gew.-Teile, besonders bevorzugt 0,1 bis 0,5 Gew.-Teile, pro 100 Gew.-Teile A + B + C eines fluorierten Polyolefins mit mittleren Teilchendurchmessern von 0,05 bis 1.000 µm, einer Dichte von 1,2 bis 2,3 g/cm$^3$ und einem Fluorgehalt von 59 bis 76 Gew.-%. E) wird vorzugsweise in Form einer koagulierten Mischung einer Emulsion des fluorierten Polyolefins mit mittlerem Teilchendurchmesser von 0,05 bis

20 µ und einer Dichte von 1,2 bis 1,9 g/cm$^3$ mit einer Emulsion des Pfropfpolymerisates eingesetzt. Das Gewichtsverhältnis Pfropfpolymerisat B) zu fluoriertem Polyolefin E) ist dabei 95:5 bis 60:40 und die erforderliche zusätzliche Menge B), 0,1 bis 4,0 Gew.-Teile pro 100 Gew.-Teile A + B + C. Die Formmassen können wirksame Mengen an üblichen Stabilisatoren, Pigmenten, Fließhilfsmitteln, Füll- und Verstärkungsstoffen, Entformungsmitteln, Antistatika enthalten.

In dem Europäischen Patent 0 174 493 wird die Verbesserung der Flammwidrigkeit von Formmassen aus Polycarbonaten, ABS-Pfropfpolymerisaten und thermoplastischen Copolymerisaten mit einer Kombination aus Halogenverbindung, Phosphorverbindung und Tetrafluorethylenpolymerisat beschrieben. Formmassen gemäß EP 0 174 493 weisen zwar eine hervorragende Oberflächenbeschaffenheit auf; nach längerer Einwirkung von Sonnenlicht treten jedoch unerwünschte Verfärbungen auf,

Flammwidrige Formmassen auf Basis von halogenfreien Polycarbonaten, Pfropfpolymerisaten, Phosphorverbindungen, Tetrafluorethylenpolymerisaten und gegebenenfalls weiteren halogenfreien Copolymerisaten sind Gegenstand der DE-OS 38 19 081.

DE-OS 37 38 143 lehrt die Verwendung spezieller, mit einem Redox-Aktivatorsystem aus Ascorbinsäure und organischem Hydroperoxid hergestellter ABS-Pfropfpolymerisate als Additive zur Verbesserung der Benzinbeständigkeit von Polycarbonat-Formmassen, die zusätzlich mit üblichen Flammschutzmitteln ausgerüstet sein können.

Es wurde gefunden, daß flammwidrige Formmassen gemäß EP 0 174 493 oder DE-OS 38 19 081, die mit Redox-Initiatoren hergestellte ABS-Pfropfpolymerisate gemäß DE-OS 37 38 143 enthalten, verbesserte Lichtalterung und verbesserte Kerbschlagzähigkeit aufweisen.

Die Polycarbonate und Polyestercarbonate A) sind bekannt und nach bekannten Verfahren herstellbar (vergl. Schnell, "Chemistry and Physics of Polycarbonates", Interscience Publishers, 1964; DE-AS 1 495 626, DE-OS 2 232 877, DE-OS 2 703 376, DE-OS 3 000 610, DE-OS 2 714 544, DE-OS 2 940 024 und DE-OS 3 007 934). Ein besonders bevorzugtes Herstellungsverfahren ist die Phasengrenzflächenpolykondensation.

Die Polycarbonate, Polyestercarbonate und Polyester können in bekannter Weise, beispielsweise durch Phasengrenzflächenpolykondensation von Diphenolen mit Kohlensäure-halogeniden, vorzugsweise Phosgen und/oder aromatischen Dicarbonsäuredihalogeniden, vorzugsweise Benzoldicarbonsäuredihalogeniden, hergestellt werden, gegebenenfalls unter Verwendung von Kettenabbrechern, beispielsweise Monophenolen, und/oder trifunktionellen oder mehr als trifunktionellen Verzweigern, beispielsweise Triphenolen oder Tetraphenolen. (Für die Herstellung von aromatischen Polycarbonaten vergl. Schnell, loc, cit., Seite 31 ff; für die Herstellung von aromatischen Polyestern vergl. DE-OS 2 940 024 und für die Herstellung von aromatischen Polyestercarbonaten vergl. DE-OS 3 007 934.)

Bevorzugt dienen als Basis für die Polycarbonate, Polyestercarbonate und Polyester Diphenole der Formel (II)

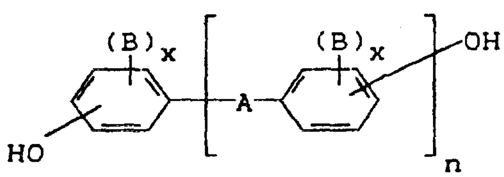

(II)

worin

A eine chemische Bindung, $C_1$-$C_5$-Alkylen, $C_2$-$C_5$-Alkyliden, $C_5$-$C_6$-Cycloalkyliden, -O-, -SO-,

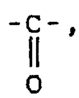 -S-, 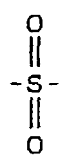

oder einen Rest der Formel (III)

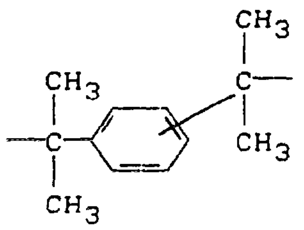

(III)

B Chlor, Brom,

x 0, 1 oder 2 und

n 1 oder 0 bedeuten.

Die wichtigsten dieser Diphenole sind Bisphenol-A, 2,4-Bis-(4-hydroxyphenyl)-2-methylbutan, 1,1-Bis-(4-hydroxyphenyl)-cyclohexan, 4,4-Dihydroxyphenylsulfid, 4,4-Dihydroxyphenylsulfon sowie deren di- und tetrabromierte oder -chlorierte Derivate, wie 2,2-Bis-(3-chlor-4-hydroxy-phenyl)-propan, 2,2-Bis-(3,5-dichlor-4-hydroxyphenyl)-propan oder 2,2-Bis-(3,5-dibrom-4-hydroxyphenyl)-propan.

Besonders bevorzugt ist 2,2-(Bis-4-hydroxyphenyl)-propan (Bisphenol A).

Geeignete thermoplastische, aromatische Polycarbonate A) haben mittlere Molekulargewichte ($\overline{M}$ w Gewichtsmittel, gemessen durch Ultrazentrifugation oder Streulichtmessung) von 10.000 bis 200.000, vorzugsweise von 20.000 bis 80.000. Sie können verzweigt sein, durch den Einbau von 0,05 bis 2,0 Mol-%, bezogen auf Diphenole, drei- oder höherfunktionelle Verbindungen, beispielsweise Tri- oder Polyphenolen.

Bevorzugte Polycarbonate sind Bisphenol A-Homopolycarbonate und Copolycarbonate von Bisphenol A mit bis zu 15 Mol-% 2,2-Bis-(3,5-dibrom-4-hydroxyphenyl)-propan.

Aromatische Dicarbonsäuredihalogenide zur Herstellung der thermoplastischen, aromatischen Polyester und thermoplastischen, aromatischen Polyestercarbonate sind vorzugsweise die Dichloride der Isophthalsäure, Terephthalsäure, Diphenylether-4,4'-dicarbonsäure und der Naphthalin-2,6-dicarbonsäure.

Besonders bevorzugt sind Gemische der Dichloride der Isophthalsäure und der Terephthalsäure im Verhältnis von 1:20 bis 20:1.

Zur Herstellung der aromatischen Polyester werden nur Carbonsäuredichloride, zur Herstellung von Polyestercarbonaten wird zusätzlich ein Kohlensäurehalogenid, vorzugsweise Phosgen, verwendet.

Als Kettenabbrecher bei der Herstellung der aromatischen Polyester und Polyestercarbonate kommen außer Monophenolen noch deren Chlorkohlensäureester sowie die Säurechloride von aromatischen Monocarbonsäuren (gegebenenfalls durch $C_1$-$C_{22}$-Alkylgruppen oder Halogen substituiert) sowie aliphatische $C_2$-$C_{22}$-Monocarbonsäurechloride in Betracht.

Die Menge der Kettenabbrecher ist bis 10 Mol-% (bevorzugt 0,1 - 10 Mol-%) für phenolische Kettenabbrecher, bezogen auf Diphenole, für Monocarbonsäurechloride, bezogen auf Dicarbonsäuredichloride.

Die aromatischen Polyester und Polyestercarbonate können auch aromatische Hydroxycarbonsäuren eingebaut enthalten.

Die aromatischen Polyester und aromatischen Polyestercarbonate können sowohl linear als auch in bekannter Weise verzweigt sein (s. dazu ebenfalls DE-OS 2 940 024 und DE-OS 3 007 934).

In den thermoplastischen, aromatischen Polyestercarbonaten A) ist der Anteil an Carbonatstruktureinheiten an sich beliebig, vorzugsweise aber bis zu 100 Mol-%, insbesondere bis zu 80 Mol-%, besonders bevorzugt bis zu 50 Mol-%, bezogen auf die Summe an Estergruppen und Carbonatgruppen.

Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polyester und aromatischen Polyestercarbonate ist bevorzugt 1,18 bis 1,4, vorzugsweise 1,22 bis 1,3 (gemessen an Lösungen von 0,5 g Polyestercarbonat in 100 ml $CH_2Cl_2$-Lösung bei 25°C).

Die thermoplastischen, aromatischen Polycarbonate und die Polyestercarbonate können allein oder als Gemisch eingesetzt werden.

Die Herstellung der Pfropfpolymerisate B) wird z.B. in der DE-OS 3 708 913 beschrieben, ihre Verwendung in Polycarbonat- und/oder Polyestercarbonat-Formmassen zur Verbesserung der Benzinbeständigkeit in der DE-OS 3 738 143.

Gemäß DE-OS 3 708 913 werden die Pfropfpolymerisate B) durch Polymerisation von harzbildenden Monomeren

in Gegenwart eines Dienkautschuks erhalten, wobei Pfropfausbeuten größer als 60 Gew.-%, vorzugsweise größer als 75 Gew.-%, erreicht werden. (Pfropfausbeute ist das Gewichtsverhältnis der pfropfpolymerisierten Monomeren zu den gesamten Monomeren x 100; angegeben in %). Die hohen Pfropfausbeuten sind u. a. durch die dort angewendete Redoxkatalysation aus Ascorbinsäure und Hydroperoxiden gegeben.

Die erfindungsgemäßen Formmassen besitzen aufgrund ihres Gehaltes an Pfropfpolymerisaten gemäß DE-OS 3 708 913 verbesserte Lichtbeständigkeit und verbesserte Zähigkeit.

Erfindungsgemäß geeignete thermoplastische Copolymerisate C.1 sind Copolymerisate von Styrol, α-Methylstyrol, kernsubstituiertem Styrol wie Halogenstyrol, p-Methylstyrol (C.1.1) mit Acrylnitril, Methacrylnitril, Methylmethacrylat, Maleinsäureanhydrid, N-alkyl- oder arylsubstituiertes Maleinimid (C.1.2).

Thermoplastische Copolymerisate mit einer Zusammensetzung gemäß C.1 können bei der Herstellung von B) als Nebenprodukte entstehen; die erfindungsgemäß eingesetzte Menge an Copolymerisat C.1 bezieht dieses Nebenprodukt der Pfropfpolymerisation nicht mit ein.

Die Copolymerisate C.1 sind harzartig, thermoplastisch und kautschuktrei. Besonders bevorzugte Copolymerisate C.1 sind solche aus Styrol und/oder α-Methylstyrol mit Acrylnitril und gegebenenfalls mit Methylmethacrylat.

Besonders bevorzugt enthält C.1 60 bis 80 Gew.-% C.1.1 und 40 bis 20 Gew.-% C.1.2.

Die Copolymerisate C.1 sind bekannt und können durch radikalische Polymerisation, insbesondere durch Emulsions-, Suspensions-, Lösungs- oder Massepolymerisation hergestellt werden. Sie besitzen vorzugsweise Molekulargewichte $\overline{M}_w$ (Gewichtsmittel, ermittelt durch Lichtstreuung oder Sedimentation) von 15.000 bis 200.000 und Grenzviskositäten von 20 bis 110 ml/g (gemessen in Dimethylformamid bei 25°C).

Polyalkylenterephthalate C.2 im Sinne der Erfindung sind Reaktionsprodukte aus aromatischen Dicarbonsäuren oder ihren reaktionsfähigen Derivaten (z. B. Dimethylestern oder Anhydriden) und aliphatischen, cycloaliphatischen oder araliphatischen Diolen und Mischungen dieser Reaktionsprodukte. Sie können nach bekannten Methoden hergestellt werden (Kunststoff-Handbuch, Bd. VIII, S. 695 ff, Carl-Hanser-Verlag, München, 1973).

In bevorzugten Polyalkylenterephthalaten C.2 sind mindestens 80, vorzugsweise mindestens 90 Mol-%, der Dicarbonsäurereste, Terephthalsäurereste und mindestens 80, vorzugsweise mindestens 90 Mol-%, der Diolreste, Ethylenglykol- und/oder Butandiol-1,4-reste.

Die Polyalkylenterephthalate C.2 können neben Terephthalsäureresten bis zu 20 Mol-% Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernstein-, Adipin-, Sebacin-, Azelain-, Cyclohexandiessigsäure.

Sie können neben Ethylenglykol- bzw. Butandiol-1,4-resten bis zu 20 Mol-%, vorzugsweise bis zu 10 Mol-%, anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexandimethanol-1,4, 3-Ethylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethylcyclobutan, 2,2-(Bis-3-β-hydroxyethoxyphenyl)propan und 2,2-Bis-(4-hydroxypropoxyphenyl)-propan (DE-OS 2 407 647, 2 407 776, 2 715 932).

Die Polyalkylenterephthalate C.2 können durch Einbau relativ kleiner Mengen 3- oder 4-wertiger Alkohole oder 3- oder 4-basischer Carbonsäuren, wie sie z.B. in DE-OS 1 900 270 und US-PS 3 692 744 beschrieben sind, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate C.2, die allein aus Terephthalsäure oder deren reaktionsfähigen Derivaten (z.B. deren Dialkylestern) und Ethylenglykol und/oder Butandiol-1,4 hergestellt worden sind, und Mischungen dieser Polyalkylenterephthalate.

Die als Komponente C.2 vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-%) bei 25°C und einer Konzentration von 0,5 g/dl.

Die erfindungsgemäß geeigneten Phosphorverbindungen D) der Formel (I)

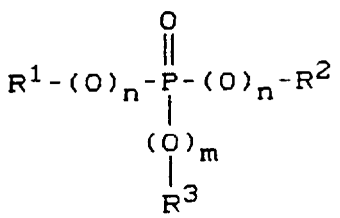

(I)

worin

| | |
|---|---|
| $R^1$, $R^2$ und $R^3$ | unabhängig voneinander gegebenenfalls halogeniertes $C_1$-$C_8$-Alkyl oder gegebenenfalls halogeniertes und/oder alkyliertes $C_6$-$C_{20}$-Aryl, |
| m | Null oder 1 und |
| n | Null oder 1 bedeuten, |

sind generell bekannt (s. beispielsweise Ullmann, Enzyklopädie der technischen Chemie, Bd. 18, S. 301 ff, 1979; Houben-Weyl, Methoden der Organischen Chemie, Bd. 12/1, S. 43; Beilstein, Bd. 6, S. 177).

Bevorzugte Substituenten $R^1$ bis $R^3$ sind Methyl, Butyl, Octyl, Chlorethyl, 2-Chlorpropyl, 2,3-Dibrompropyl, Phenyl, Kresyl, Cumyl, Naphthyl, Chlorphenyl, Bromphenyl, Pentachlorphenyl und Pentabromphenyl.

Bevorzugte Phosphorverbindungen D) sind Tributylphosphat, Tris-(2-chlorethyl)-phosphat, Tris-(2,3-dibrompropyl) phosphat, Triphenylphosphat, Trikresylphosphat, Diphenylkresylphosphat, Diphenyloctylphosphat, Diphenyl-2-ethylkresylphosphat, Tri(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid und Trikresylphosphinoxid.

Die fluorierten Polyolefine E) sind hochmolekular und besitzen Glasübergangstemperaturen von über -30°C, in der Regel von über 100°C, Fluorgehalte von 59 bis 76, vorzugsweise von 65 bis 76, insbesondere von 70 bis 76, Gew.-% und mittlere Teilchendurchmesser $d_{50}$ von 0,05 bis 1.000, vorzugsweise 0,05 bis 20 µm. Bevorzugte fluorierte Polyolefine E) sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vergl. "Vinyl and Related Polymers" von Schildknecht, John Wiley & Sons, Inc., New York, 1962, Seite 484 bis 494; "Fluorpolymers" von Wall, Wiley-Intersience, John Wiley & Sons, Inc., New York, Band 13, 1970, Seite 623 bis 654; "Modern Plastics Encyclopedia", 1970 bis 1971, Band 47, Nr. 10 A, Oktober 1970, Mc Graw-Hill, Inc,, New York, Seite 134 und 774; "Modern Plastics Encyclopedia", 1975 bis 1976, Oktober 1975, Band 52, Nr. 10 A, Mc Graw-Hill, Inc.; New York, Seiten 27, 28 und 472, und US-PS 3 671 487, 3 723 373 und 3 838 092).

Sie können in bekannter Weise durch Polymerisation von Tetrafluorethylen in wäßrigem Medium mit einem freie Radikale bildenden Katalysator, beispielsweise Natrium-, Kalium- oder Ammoniumperoxydisulfat bei Drucken von 7 bis 71 $kg/cm^2$ und bei Temperaturen von 0 bis 200°C, vorzugsweise 20 bis 100°C hergestellt werden (vergl. US-PS 2 393 967). Je nach Einsatzform kann ihre Dichte 1,2 bis 2,3 $g/cm^3$, der mittlere Teilchendurchmesser 0,05 bis 1.000 µm sein.

Bevorzugte fluorierte Polyolefine E) sind Tetrafluorethylenpolymerisate mit mittleren Teilchendurchmessern von 0,05 bis 20 µm, vorzugsweise 0,08 bis 10 µm, und einer Dichte von 1,2 bis 1,9 $g/cm^3$ in Form einer koagulierten Mischung von Emulsionen der Tetrafluorethylenpolymerisate E) mit Emulsionen der Pfropfpolymerisate B).

Ebenfalls geeignet sind Tetrafluorethylenpolymerisate mit mittleren Teilchendurchmessern von 100 bis 1.000 µm und Dichten von 2,0 $g/cm^3$ bis 2,3 $g/cm^3$ in Pulverform.

Durch den Zusatz von fluorierten Polyolefinen wird insbesondere das Abtropfen der geschmolzenen Formmasse während des Brennens reduziert oder ganz verhindert; durch die Verwendung als koagulierte Mischung wird zusätzlich die Oberfläche von Formkörpern aus den erfindungsgemäßen Mischungen verbessert, was besonders für die Herstellung sehr großflächiger Teile und bei sehr hohen Verarbeitungstemperaturen wichtig ist.

Zur Herstellung einer koagulierten Mischung aus B) und E) wird zuerst eine wäßrige Emulsion (Latex) eines Pfropfpolymerisates B) mit mittleren Latexteilchendurchmessern von 0,05 bis 2 µm, insbesondere 0,1 bis 0,6 µm, mit einer feinteiligen Emulsion eines Tetrafluorethylenpolymerisates E) in Wasser mit mittleren Teilchendurchmessern von 0,05 bis 20 µm, insbesondere von 0,08 bis 10 µm, vermischt; geeignete Tetrafluorethylenpolymerisat-Emulsionen besitzen üblicherweise Feststoffgehalte von 30 bis 70 Gew.-%, insbesondere von 50 bis 60 Gew.-%. Die Emulsionen der Pfropfpolymerisate B) besitzen Feststoffgehalte von 25 bis 50 Gew.-%, vorzugsweise von 30 bis 45 Gew.-%. In der Emulsionsmischung ist das Gewichtsverhältnis Pfropfpolymerisat B) zu Tetrafluorethylenpolymerisat E) 95:5 bis 60:40.

Die Emulsionsmischung wird in bekannter Weise koaguliert, beispielsweise durch Sprühtrocknen, Gefriertrocknung oder Koagulation mit anorganischen oder organischen Salzen, Säuren, Basen oder organischen, mit Wasser mischbaren Lösungsmitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsüblich (z.B. Teflon® 30 N der Du Pont).

Die erfindungsgemäßen, thermoplastischen Formmassen können weitere für Polycarbonate, Pfropfpolymerisate oder für thermoplastische Polymerisate bekannte Zusätze, wie Stabilisatoren, Pigmente, Fließmittel, Entformungsmittel, Füll- und Verstärkungsstoffe, Antistatika enthalten.

Die gefüllten oder verstärkten Formmassen können bis zu 60, vorzugsweise 5 bis 50 Gew.-%, bezogen auf die Formmasse, Füll- und/oder Verstärkungsstoffe enthalten. Als Verstärkungsstoffe geeignet sind z.B. Glasfasern, Kohlefasern, Aramidfasern. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die erfindungsgemäßen Formmassen können hergestellt werden, indem man ihre Bestandteile in bekannter Weise vermischt und das Gemisch bei Temperaturen von 200 bis 330°C in üblichen Aggregaten, wie Innenknetern oder Ein- oder Zweischneckenextrudern, schmelzcompoundiert oder indem man Lösungen oder Dispersionen der Bestandteile in geeigneten organischen Lösungsmitteln, beispielsweise in Chlorbenzol, mischt und die Lösungs- bzw. Dispersionsgemische in gebräuchlichen Eindampfaggregaten, beispielsweise in Eindampfextrudern, eindampft. E) wird vorzugsweise als koagulierte Mischung mit B) eingesetzt.

Die Bestandteile können in bekannter Weise sukzessive oder simultan gemischt werden, bevorzugt bei etwa 20°C (Zimmertemperatur) oder bei bis zu 50°C.

Die erfindungsgemäßen Formmassen können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte, wie Saftpressen, Kaffeemaschinen, Mixer, für Büromaschinen oder Abdeckplatten für Bauten und Teile für Kraftfahrzeuge. Sie werden außerdem in der Elektrotechnik eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Die mittleren Teilchendurchmesser $d_{50}$ wurden ermittelt durch Ultrazentrifugenmessungen nach W. Scholtan et.al., Colloids u. Z. Polymere 250 (1972), S. 782 bis 796.

Beispiele

1. Bestandteile der Formmassen

A) Polycarbonate

A.1 Lineares Bisphenol-A-Polycarbonat mit einer relativen Lösungsviskosität $\eta_{rel}$ von 1,26 bis 1,28, gemessen in $CH_2Cl_2$ bei 25°C und einer Konzentration von 0,5 g/100 ml.

A.2 Copolycarbonat auf Basis von 90 Gew.-% Bisphenol A und 10 Gew.-% Tetrabrombisphenol A mit einer relativen Lösungsviskosität von 1,284, gemessen in $CH_2Cl_2$ bei 25°C und einer Konzentration von 0,5 g/100 ml; Gehalt an Brom: ca. 5 Gew.-%, bezogen auf A.2.

B) Pfropfpolymerisate

a) Pfropfgrundlage (Latex a)
Emulsion eines partiell vernetzten, grobteiligen Polybutadiens mit einem mittleren Teilchendurchmesser von 0,38 µm ($d_{50}$-Wert), einem Gelgehalt von 89 Gew.-%. Die Emulsion enthält 50 Gew.-% Polymerisatfeststoff.

b) Herstellung der Pfropfpolymerisate

B.I Pfropfpolymerisat aus 50 Gew.-% Dienkautschuk (a) und 50 Gew.-% Styrol-Acrylnitril Copolymerisat gemäß DE-OS 3 708 913.

Eine Mischung aus 200 Gew.-Teilen des Latex (a) und 149 Gew.-Teilen Wasser werden in einem Reaktor vorgelegt und auf 60 bis 62°C aufgeheizt. Bei dieser Temperatur werden in der angegebenen Reihenfolge in den Reaktor eingegeben:

1. Mischung aus
0,0836 Gew.-Teilen Cumolhydroperoxid 6,9600 Gew.-Teilen Wasser 0,0600 Gew.-Teilen Na-Salz von $C_{14}$-$C_{16}$-Alkylsulfonsäuren

2. Mischung aus
0,0557 Gew.-Teilen Ascorbinsäure 6,9600 Gew.-Teilen Wasser

Dann werden innerhalb von 4 Stunden bei einer Innentemperatur von 60 bis 62°C gleichzeitig in den Reaktor unter Rühren eindosiert:

Z1) Zulauf 1

39,05 Gew.-Teile Wasser 4,00 Gew.-Teile Na-Salz der disproportionierten Abietinsäure 3,10 Gew.-Teile 1n-Natronlauge 0,62 Gew.-Teile Cumolhydroperoxid

Z2) Zulauf 2
72,00 Gew.-Teile Styrol 28,00 Gew.-Teile Acrylnitril

Z3) Zulauf 3
39,80 Gew.-Teile Wasser 0,105 Gew.-Teile Ascorbinsäure

Anschließend wird bei 60 bis 62°C 6 Stunden lang auspolymerisiert. Der Monomerumsatz ist größer als 97 Gew.-%.

Nach Stabilisierung mit 1,2 Gew.-Teilen phenolischem Antioxidanz pro 100 Gew.-Teile Pfropfpolymerisat wird das Pfropfpolymerisat durch Koagulation mit einer Essigsäure/Magnesium-Sulfat-Mischung isoliert, gewaschen und zu einem Pulver getrocknet.

Die Pfropfausbeute von Styrol und Acrylnitril ist 89 Gew.-%.

Die Pfropfausbeute wurde bestimmt durch fraktionierende Entmischung mit den entmischenden Flüssigkeiten Dimethylformamid/Methylcyclohexan in der Ultrazentrifuge und durch Ermittlung der Mengen und der chemischen Zusammensetzung der so erhaltenen Fraktionen [s. R. Kuhn, Makromol.-Chemie 177, 1525 (1976)].

B.II Pfropfpolymerisat aus 50 Gew.-% Dienkautschuk (a) und 50 Gew.-% Styrol-Acrylnitril-Copolymerisat (Vergleich)

In einem Reaktor werden vorgelegt:
1.500 Gew.-Teile des Latex a) und 1.030 Gew.-Teile Wasser. Nach Aufheizen auf 65°C wird eine Starterlösung aus 3 Gew.-Teilen Kaliumperoxidisulfat in 50 Gew.-Teilen Wasser eingespeist. Anschließend werden gleichzeitig innerhalb von 6 Stunden bei 65°C in den Reaktor eingespeist:

1. Lösung 1
540 Gew.-Teile Styrol 210 Gew.-Teile Acrylnitril

2. Lösung 2
1.000 Gew.-Teile Wasser 13 Gew.-Teile Na-Salz der disproportionierten Abietinsäure 10 Gew.-Teile 1n-Natronlauge

Dann wird bei 65°C weitere 4 Stunden unter Rühren auspolymerisiert. Der Monomerumsatz ist größer als 98 Gew.-%. Das Pfropfpolymerisat wird wie in B.I stabilisiert und isoliert. Die Pfropfausbeute von Styrol und Acrylnitril ist 55 Gew.-%. (Bestimmt wie in B.I)

C) Thermoplastisches Copolymerisat

Styrol/Acrylnitril-Copolymerisat mit einem Gewichtsverhältnis von Styrol/Acrylnitril = 72:28 und einer Grenzviskosität $[\eta] = 0{,}55$ dl/g (Messung in Dimethylformamid bei 20°C).

D) Triphenylphosphat

E)

Tetrafluorethylenpolymerisat als koagulierte Mischung einer Styrol-Acrylnitril Pfropfpolymerisat-Emulsion B) in Wasser und einer Tetrafluorethylenpolymerisat-Emulsion (Teflon® 30N der Du Pont) in Wasser. Das Gewichtsverhältnis Pfropfpolymerisat B) zu Tetrafluorethylenpolymerisat E) in der Mischung ist 90 zu 10. Die Tetrafluorethylenpolymerisat-Emulsion besitzt einen Feststoffgehalt von 60 Gew.-%; der mittlere Teilchendurchmesser ist 0,05 bis 0,5 µm. Die Styrol-Acrylnitril Pfropfpolymerisat-Emulsion besitzt einen Feststoffgehalt von 34 Gew.-% und mittleren Latexteilchendurchmesser von 0,38 µm.

Herstellung von E.I

Die Emulsion des Tetrafluorethylenpolymerisats wurde mit der Emulsion des Styrol-Acrylnitril-Pfropfpolymerisats B.I vermischt und mit 1,8 Gew.-%, bezogen auf Polymerfeststoff phenolischer Antioxidantien stabilisiert. Bei 85 bis 95°C wurde die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser

befreit und danach bei 100°C zu einem Pulver getrocknet. Dieses Pulver kann dann mit den weiteren Komponenten in den beschriebenen Aggregaten compoundiert werden.

Herstellung von E.II

Analog zu E.I, aber anstelle von B.I B.II eingesetzt.

2. <u>Herstellung und Prüfung der erfindungsgemäßen Formmassen</u>

Die Bestandteile A), B), C), D) und E) wurden auf einem Doppelwellenextruder (Werner und Pfleiderer) vom Typ ZSK 53 bei einer Temperatur von 240°C compoundiert.

Formkörper wurden durch Spritzgießen bei 240°C hergestellt.

Das Brandverhalten der Proben wurde nach UL-Subj. 94 V in Prüfkörperdicken von 1,6 mm gemessen. Der UL-94-Test wird wie folgt durchgeführt:

Substanzproben werden zu Stäben der Abmessungen 127 x 12,7 x 1,6 mm geformt. Die Stäbe werden vertikal so montiert, daß die Unterseite des Probekörpers sich 305 mm über einem Streifen Verbandstoff befindet. Jeder Probestab wird einzeln mittels zweier aufeinanderfolgender Zündvorgänge von 10 s Dauer entzündet, die Brenneigenschaften nach jedem Zündvorgang werden beobachtet und danach die Probe bewertet. Zum Entzünden der Probe wird ein Bunsenbrenner mit einer 19 mm (3/4 inch) hohen blauen Flamme von Erdgas mit einem Wärmeinhalt von $3{,}73 \times 10^4$ $kJ/m^3$ (1.000 BUT per cubic foot) benutzt.

Die UL-94 Klassifizierung V-O bedeutet, daß keine Probe länger als 10 s nach jeder Einwirkung der Testflamme brennt; keine Probe zeigt eine Gesamtflammzeit von mehr als 50 s bei der zweimaligen Flammeinwirkung auf jeden Probensatz; keine Probe brennt vollständig bis hinauf zu der am oberen Ende der Probe befestigten Halteklammer; keine Probe entzündet die unterhalb der Probe angeordnete Watte durch brennende Tropfen oder Teilchen; keine Probe glimmt länger als 30 s nach Entfernen der Testflamme.

Andere UL-94-Klassifizierungen bezeichnen Proben, die weniger flammwidrig und selbstverlöschend sind und die flammende Tropfen oder Teilchen abgeben. Diese Klassifizierungen werden mit UL-94 V-1 und V-2 bezeichnet. N.b. heißt "nicht bestanden" und ist die Klassifizierung von Proben, die eine Nachbrennzeit von 30 s aufweisen.

Die Kerbschlagzähigkeit wurde in Anlehnung an DIN 53 453 an Stäben der Abmessung 50 x 6 x 4 mm bei Zimmertemperatur bestimmt; die Stäbe waren mit einer V-förmigen 2,7 mm tiefen Kerbe versehen.

Für den Belichtungstest entsprechend ASTM D 4459-85 ("IBM-Test") wurden Musterplättchen der Abmessung 60 x 40 x 2 mm bei 250°C abgespritzt und in einem Xenon-Weatherometer Ci 35 (Testbedingungen 0,3 $W/m^2$ bei 340 nm, Schwarztafeltemperatur 55°C, relative Luftfeuchte 55 %, Borosilikat-Innenfilter, Soda-Lime-Außenfilter) 300 h belichtet und anschließend visuell beurteilt.

Tabelle 1 zeigt, daß bei vergleichbaren Rezepturen (= gleiche Bruttozusammensetzung) die erfindungsgemäßen Formmassen (1 und 3), die das redox-initiierte Pfropfpolymerisat B.I enthalten, bei gleicher Flammwidrigkeit deutlich höhere Kerbschlagzähigkeit besitzen als die Vergleichsformmassen (2 und 4).

Vorzugsweise besteht in den erfindungsgemäßen Formmassen der gesamte Pfropfpolymerisatanteil, d.h. B) und der gegebenenfalls mit E) (in Form der Cofällung) eingebrachte Teil aus redox-katalysiertem Pfropfpolymerisat (Beispiel 3).

Die erfindungsgemäße Wirkung tritt aber auch noch ein, wenn nur B) redox-katalysiertes Pfropfpolymerisat ist, E) (Cofällung) aber peroxid-katalysiertes Pfropfpolymerisat enthält.

Tabelle 2 zeigt, daß die erfindungsgemäße Formmasse aus Beispiel 1 neben gleichem Brandverhalten eine deutlich höhere Kerbschlagzähigkeit als das Vergleichsmaterial 2 aufweist.

Von den beiden dunkelblau eingefärbten Formmassen weist das erfindungsgemäße Material (Beispiel 1) auch nach 300 Stunden Belichtung keine Beeinträchtigung auf, während das Vergleichsmaterial 2 sich nach dieser Zeit deutlich verfärbt hat (Farbaufhellung durch Vergrauung).

Tabelle 1

Zusammensetzung und Eigenschaften der Formmassen

| Bsp. | Komponenten [1] (Gew.-Teile) | | | | | | | | Kerbschlagzähigkeit (kJ/$m^2$) | UL 94 V 1,6 mm |
|---|---|---|---|---|---|---|---|---|---|---|
| | A.1 | A.2 | B.I. | B.II | C | D | E.I | E.II | | |
| 1 | 76,5 | | 6 | | 17,5 | 14 | | 3,5 | 14,4 | V O |
| 2[2] | 76,5 | | | 6 | 17,5 | 14 | | 3,5 | 7,9 | V O |
| 3 | | 68 | 12 | | 20 | 11,5 | 4,2 | | 28,6 | V O |
| 4[2] | | 68 | | 12 | 20 | 11,5 | | 4,2 | 14,0 | V O |

1) Beispiele 1 und 2 enthalten zusätzlich Entformungsmittel (1 Gew.-Teil Pentaerythrit-tetrastearat) und $TiO_2$ (3 Gew.-Teile)
Beispiele 3 und 4 enthalten zusätzlich Entformungsmittel (1 Gew.-Teil Pentaerythrit-tetrastearat) und Rußkonzentrat (0,7 Gew.-Teile Black Pearls 900)

2) Vergleich

Tabelle 2

Zusammensetzung und Eigenschaften der Formmassen

| Bsp. | Komponenten 1) (Gew.-Teile) | | | | | | | Kerbschlagzähigkeit (kJ/m²) | UL 94 V 1,6 mm | Belichtung ("IBM-TEST") 300 h |
|---|---|---|---|---|---|---|---|---|---|---|
| | A.2 | B.I | B.II | C | D | E.I | E.II | | | |
| 1 | 68 | 12 | | 20 | 11,5 | 4,2 | | 27,9 | V 0 | keine Verfärbung |
| 2 2) | 68 | | 12 | 20 | 11,5 | | 4,2 | 14,7 | V 0 | Graufärbung |

1) Beispiele 1 und 2 enthalten zusätzlich jeweils
1,0 Gew.-Teil Entformungsmittel Pentaerythrittetrastearat
1,6 Gew.-Teile Blaupigment (Basis Ulma-Blau 690 MP)-Mischung

2) Vergleich

## Patentansprüche

### Patentansprüche für folgende Vertragsstaaten : DE, GB, FR, IT, NL

**1.** Thermoplastische Formmassen, enthaltend

A) 30 bis 97 Gew.-% - bezogen auf A + B + C-thermoplastisches, aromatisches Polycarbonat, aromatisches Polyestercarbonat, aromatischen Polyester oder Mischungen davon,

B) 3 bis 30 Gew.-% - bezogen auf A + B + C-Pfropfpolymerisat aus

B.1 40 bis 90 Gew.-% eines wenigstens partiell vernetzten, teilchenförmigen Dienkautschuks eines mittleren Teilchendurchmessers ($d_{50}$) von 0,05 µm bis 2,0 µm und

B.2 60 bis 10 Gew.-% Styrol, Acrylnitril, Methylmethacrylat oder Mischungen daraus, hergestellt durch Emulsion-Pfropfpolymerisation mit einem Initiator aus Cumolhydroperoxid oder tert.-Butylhydroperoxid und Ascorbinsäure, zur Erzielung einer Pfropfausbeute von > 60 Gew.-% der Monomeren B.2, und zusätzlich

C) 0 bis 40 Gew.-% - bezogen auf A + B + C-thermoplastisches Harz, welches

C.1 ein thermoplastisches Copolymerisat aus

C.1.1 50 bis 95 Gew.-% Styrol, α-Methylstyrol, kernsubstituiertem Styrol, Methylmethacrylat oder Mischungen daraus, und

C.1.2 50 bis 5 Gew.-% Acrylnitril, Methacrylnitril, Methylmethacrylat, Maleinsäureanhydrid, N-substituiertem Maleinimid oder Mischungen daraus,

oder

C.2 ein Polyalkylenterephthalat ist,

D) 1 bis 20 Gew.-Teile - bezogen auf A + B + C, einer Phosphorverbindung der Formel (I)

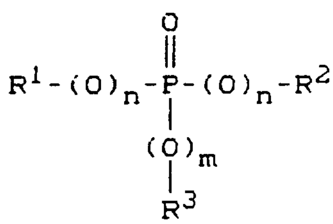

(I)

worin

R¹, R² und R³ — unabhängig voneinander gegebenenfalls halogeniertes $C_1$-$C_8$-Alkyl oder gegebenenfalls halogeniertes und/oder alkyliertes $C_6$-$C_{20}$-Aryl,

m — Null oder 1 und

n — Null oder 1 bedeuten.

E) 0,05 bis 5 Gew.-Teile pro 100 Gew.-Teile - bezogen auf A + B + C - eines fluorierten Polyolefins mit mittleren Teilchendurchmessern von 0,05 bis 1.000 µm, einer Dichte von 1,2 bis 2,3 g/cm³ und einem Fluorgehalt von 59 bis 76 Gew.-%.

**2.** Thermoplastische Formmassen gemäß Anspruch 1, worin E) in Form einer koagulierten Mischung von Emulsionen des fluorierten Polyolefins E) eines mittleren Teilchendurchmessers von 0,05 bis 20 µm und einer Dichte von 1,2

bis 1,9 g/$cm^3$ mit Emulsionen von Pfropfpolymerisaten B) eingesetzt wird, wobei das Gewichtsverhältnis Pfropfpolymerisat B) zu fluoriertem Polyolefin E) 95:5 bis 60:40 ist und die zusätzliche Menge B) pro 100 Gew.-Teile A + B + C 0,1 bis 4 Gew.-Teile ist.

**3.** Thermoplastische Formmassen gemäß Anspruch 1, worin E) in Form eines Pulvers mit mittlerem Teilchendurchmesser von 100 bis 1.000 µm und einer Dichte von 2,0 g/$cm^3$ bis 2,3 g/$cm^3$ enthalten ist.

**4.** Thermoplastische Formmassen gemäß Anspruch 1, enthaltend wirksame Mengen von Stabilisatoren, Pigmenten, Fließhilfsmitteln, Füll- und Verstärkungsstoffen, Entformungsmitteln, Antistatika, oder Mischungen davon.

**5.** Formmassen gemäß Anspruch 1, enthaltend als Verstärkungsstoffe bis zu 60 Gew.-% Glasfasern, bezogen auf die Formmasse.

**6.** Verfahren zur Herstellung der Formmassen gemäß Anspruch 1, dadurch gekennzeichnet, daß man A), B), D), E) und gegebenenfalls C) in bekannter Weise vermischt und danach bei Temperaturen von 200 bis 330°C in gebräuchlichen Aggregaten schmelzcompoundiert oder schmelzextrudiert.

**Patentansprüche für folgenden Vertragsstaat : ES**

**1.** Verfahren zur Herstellung von thermoplastischen Formmassen, enthaltend

A) 30 bis 97 Gew.-% - bezogen auf A + B + C-thermoplastisches, aromatisches Polycarbonat, aromatisches Polyestercarbonat, aromatischen Polyester oder Mischungen davon,

B) 3 bis 30 Gew.-% - bezogen auf A + B + C-Pfropfpolymerisat aus

B.1 40 bis 90 Gew.-% eines wenigstens partiell vernetzten, teilchenförmigen Dienkautschuks eines mittleren Teilchendurchmessers ($d_{50}$) von 0,05 µm bis 2,0 µm und

B.2 60 bis 10 Gew.-% Styrol, Acrylnitril, Methylmethacrylat oder Mischungen daraus, hergestellt durch Emulsion-Pfropfpolymerisation mit einem Initiator aus Cumolhydroperoxid oder tert.-Butylhydroperoxid und Ascorbinsäure, zur Erzielung einer Pfropfausbeute von > 60 Gew.-% der Monomeren B.2, und zusätzlich

C) 0 bis 40 Gew.-% - bezogen auf A + B + C-thermoplastisches Harz, welches

C.1 ein thermoplastisches Copolymerisat aus

C.1.1 50 bis 95 Gew.-% Styrol, α-Methylstyrol, kernsubstituiertem Styrol, Methylmethacrylat oder Mischungen daraus, und

C.1.2 50 bis 5 Gew.-% Acrylnitril, Methacrylnitril, Methylmethacrylat, Maleinsäureanhydrid, N-substituiertem Maleinimid oder Mischungen daraus,

oder

C.2 ein Polyalkylenterephthalat ist,

D) 1 bis 20 Gew.-Teile - bezogen auf A + B + C, einer Phosphorverbindung der Formel (I)

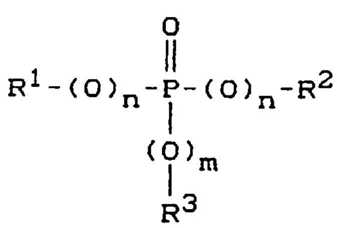

(I)

worin

$R^1$, $R^2$ und $R^3$ unabhängig voneinander gegebenenfalls halogeniertes $C_1$-$C_8$-Alkyl oder gegebenenfalls halogeniertes und/oder alkyliertes $C_6$-$C_{20}$-Aryl,

m Null oder 1 und

n Null oder 1 bedeuten.

E) 0,05 bis 5 Gew.-Teile pro 100 Gew.-Teile - bezogen auf A + B + C - eines fluorierten Polyolefins mit mittleren Teilchendurchmessern von 0,05 bis 1.000 µm, einer Dichte von 1,2 bis 2,3 g/cm$^3$ und einem Fluorgehalt von 59 bis 76 Gew.-%,

wobei man A), B), D), E) und gegebenenfalls C) vermischt und danach bei Temperaturen von 200 bis 330 °C in gebräuchlichen Aggregaten schmelzcompoundiert oder schmelzextrudiert.

2. Verfahren gemäß Anspruch 1, worin E) in Form einer koagulierten Mischung von Emulsionen des fluorierten Polyolefins E) eines mittleren Teilchendurchmessers von 0,05 bis 20 µm und einer Dichte von 1,2 bis 1,9 g/cm$^3$ mit Emulsionen von Pfropfpolymerisaten B) eingesetzt wird, wobei das Gewichtsverhältnis Pfropfpolymerisat B) zu fluoriertem Polyolefin E) 95:5 bis 60:40 ist und die zusätzliche Menge B) pro 100 Gew.-Teile A + B + C 0,1 bis 4 Gew.-Teile ist.

3. Verfahren gemäß Anspruch 1, worin E) in Form eines Pulvers mit mittlerem Teilchendurchmesser von 100 bis 1.000 µm und einer Dichte von 2,0 g/cm$^3$ bis 2,3 g/cm$^3$ enthalten ist.

4. Verfahren gemäß Anspruch 1, wobei die Formmassen wirksame Mengen von Stabilisatoren, Pigmenten, Fließhilfsmitteln, Füll- und Verstärkungsstoffen, Entformungsmitteln, Antistatika, oder Mischungen enthalten.

5. Verfahren gemäß Anspruch 1, wobei die thermoplastischen Formmassen als Verstärkungsstoffe bis zu 60 Gew.-% Glasfasern, bezogen auf die Formmasse, enthalten.

**Claims**

**Claims for the following Contracting States: DE, GB, FR, IT, NL**

1. Thermoplastic moulding compositions containing

A) 30 to 97% by weight, based on A+B+C, of thermoplastic aromatic polycarbonate, aromatic polyester carbonate, aromatic polyester or mixtures thereof,
B) 3 to 30% by weight, based on A+B+C, of a graft polymer of

B.1 40 to 90% by weight of an at least partly crosslinked particulate diene rubber having an average particle diameter ($d_{50}$) of 0.05 µm to 2.0 µm

B.2 60 to 10% by weight of styrene, acrylonitrile, methyl methacrylate or mixtures thereof prepared by emulsion graft polymerization using an initiator of cumene hydroperoxide or tert. butyl hydroperoxide and ascorbic acid to obtain a graft yield of > 60% by weight of the monomers B.2,

and, in addition,
C) 0 to 40% by weight, based on A+B+C, of a thermoplastic resin which is

C.1 a thermoplastic copolymer of

C.1.1 50 to 95% by weight of styrene, α-methyl styrene, nucleus-substituted styrene, methyl methacrylate or mixtures thereof and

C.1.2 50 to 5% by weight of acrylonitrile, methacrylonitrile, methylmethacrylate, maleic anhydride, N-substituted maleic imide or mixtures thereof

or

C.2 a polyalkylene terephthalate,

D) 1 to 20 parts by weight, based on A+B+C, of a phosphorus compound corresponding to formula (I):

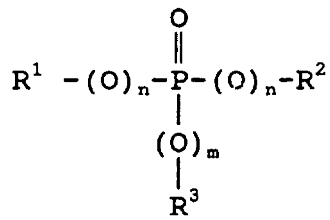

(I)

in which

$R^1$, $R^2$ and $R^3$ independently of one another represent optionally halogenated $C_{1-8}$ alkyl or optionally halogenated and/or alkylated $C_{6-20}$ aryl,

m is 0 or 1 and

n is 0 or 1,

E) 0.05 to 5 parts by weight, based on 100 parts by weight A+B+C, of a fluorinated polyolefin having average particle diameters of 0.05 to 1000 µm, a density of 1.2 to 2.3 g/cm$^3$ and a fluorine content of 59 to 76% by weight.

**2.** Thermoplastic moulding compositions as claimed in claim 1, in which E) is used in the form of a coagulated mixture of emulsions of the fluorinated polyolefin E) having an average particle diameter of 0.05 to 20 µm and a density of 1.2 to 1.9 g/cm$^3$ with emulsions of graft polymers B), the ratio by weight of graft polymer B) to fluorinated polyolefin E) being from 95:5 to 60:40 and the additional quantity of B) being from 0.1 to 4 parts by weight per 100 parts by weight of A+B+C.

**3.** Thermoplastic moulding compositions as claimed in claim 1, in which E) is present in the form of a powder having an average particle diameter of 100 to 1000 µm and a density of 2.0 g/cm$^3$ to 2.3 g/cm$^3$.

**4.** Thermoplastic moulding compositions as claimed in claim 1 containing effective quantities of stabilizers, pigments, flow aids, fillers and reinforcing materials, mould release agents, antistatic agents or mixtures thereof.

**5.** Moulding compositions as claimed in claim 1 containing up to 60% by weight of glass fibres, based on the moulding composition, as reinforcing materials.

**6.** A process for the production of the moulding compositions claimed in claim 1, characterized in that A), B), D), E) and optionally C) are mixed in known manner and the resulting mixtures are melt-compounded or melt-extruded in standard machines at temperatures of 200 to 330°C.

**Claims for the following Contracting State : ES**

**1.** A process for the production of thermoplastic moulding compositions containing

A) 30 to 97% by weight, based on A+B+C, of thermoplastic aromatic polycarbonate, aromatic polyester carbonate,-aromatic polyester or mixtures thereof,

B) 3 to 30% by weight, based on A+B+C, of a graft polymer of

B.1 40 to 90% by weight of an at least partly crosslinked particulate diene rubber having an average particle diameter ($d_{50}$) of 0.05 µm to 2.0 µm

B.2 60 to 10% by weight of styrene, acrylonitrile, methyl methacrylate or mixtures thereof prepared by emulsion graft polymerization using an initiator of cumene hydroperoxide or tert. butyl hydroperoxide and ascorbic acid to obtain a graft yield of > 60% by weight of the monomers B.2,

and, in addition,
C) 0 to 40% by weight, based on A+B+C, of a thermoplastic resin which is

C.1 a thermoplastic copolymer of

C.1.1 50 to 95% by weight of styrene, α-methyl styrene, nucleus-substituted styrene, methyl methacrylate or mixtures thereof and

C.1.2 50 to 5% by weight of acrylonitrile, methacrylonitrile, methyl methacrylate, maleic anhydride, N-substituted maleic imide or mixtures thereof

or
C.2 a polyalkylene terephthalate,

D) 1 to 20 parts by weight, based on A+B+C, of a phosphorus compound corresponding to formula (I):

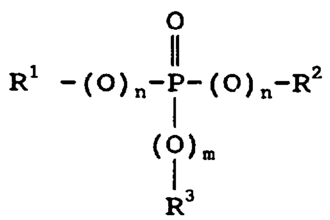

(I)

in which

| | |
|---|---|
| $R^1$, $R^2$ and $R^3$ | independently of one another represent optionally halogenated $C_{1-8}$ alkyl or optionally halogenated and/or alkylated $C_{6-20}$ aryl, |
| m | is 0 or 1 and |
| n | is 0 or 1, |

E) 0.05 to 5 parts by weight, based on 100 parts by weight A+B+C, of a fluorinated polyolefin having average particle diameters of 0.05 to 1000 µm, a density of 1.2 to 2.3 g/cm$^3$ and a fluorine content of 59 to 76% by weight,

A), B), D), E) and optionally C) being mixed in known manner and the resulting mixtures being melt-compounded or melt-extruded in standard machines at temperatures of 200 to 330°C.

**2.** A process as claimed in claim 1, in which E) is used in the form of a coagulated mixture of emulsions of the fluorinated polyolefin E) having an average particle diameter of 0.05 to 20 µm and a density of 1.2 to 1.9 g/cm$^3$ with emulsions of graft polymers B), the ratio by weight of graft polymer B) to fluorinated polyolefin E) being from 95:5 to 60:40 and the additional quantity of B) being from 0.1 to 4 parts by weight per 100 parts by weight of A+B+C.

**3.** A process as claimed in claim 1, in which E) is present in the form of a powder having an average particle diameter of 100 to 1000 µm and a density of 2.0 g/cm$^3$ to 2.3 g/cm$^3$.

**4.** A process as claimed in claim 1 containing effective quantities of stabilizers, pigments, flow aids, fillers and reinforcing materials, mould release agents, antistatic agents or mixtures thereof.

**5.** A process as claimed in claim 1, the thermoplastic moulding compositions containing up to 60% by weight of glass fibres, based on the moulding composition, as reinforcing materials.

## Revendications

### Revendications pour les Etats contractants suivants : DE, GB, FR, IT, NL

**1.** Matières à mouler thermoplastiques contenant

A) 30 à 97% en poids - par rapport à A + B + C - d'un polycarbonate aromatique, d'un polyestercarbonate aromatique, d'un polyester aromatique thermoplastique ou leurs mélanges,
B) 3 à 30 % en poids - par rapport à A + B + C - d'un polymère greffé de

B.1) 40 à 90 % en poids d'un caoutchouc diénique à l'état de particules, réticulé en partie au moins, à un diamètre de particule moyen $d_{50}$ de 0,05 à 2,0 µm, et

B.2) 60 à 10 % en poids de styrène, d'acrylonitrile, de méthacrylate de méthyle ou leurs mélanges, préparé par polymérisation greffée en émulsion avec un inducteur consistant en hydroperoxyde de cumène ou hydroperoxyde de tert-butyle et acide ascorbique, jusqu'à un rendement de greffage supérieur à 60% du poids des monomères B.2, et en outre

C) 0 à 40 % en poids - par rapport à A + B + C - d'une résine thermoplastique qui consiste en

C.1) un copolymère thermoplastique de

C.1.1) 50 à 95 % en poids de styrène, d'α-méthylstyrène, d'un styrène substitué dans le noyau, de méthacrylate de méthyle ou leurs mélanges, et

C.1.2) 50 à 5 % en poids d'acrylonitrile, de méthacrylonitrile, de méthacrylate de méthyle, d'anhydride maléique, d'un maléimide substitué à l'azote ou leurs mélanges,

ou bien
C.2) un téréphtalate de polyalkylène,

D) 1 à 20 parties en poids - par rapport à A + B + C - d'un dérivé du phosphore répondant à la formule I

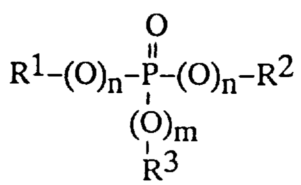

(I)

dans laquelle

| | |
|---|---|
| $R^1$, $R^2$ et $R^3$ | représentent chacun, indépendamment les uns des autres, un groupe alkyle en $C_1$-$C_8$ éventuellement halogéné ou aryle en $C_6$-$C_{20}$ éventuellement halogéné et/ou alkylé, |
| m | est égal à 0 ou 1 et |
| n | est égal à 0 ou 1, |

E) 0,05 à 5 parties en poids pour 100 parties en poids - par rapport à A + B + C - d'une polyoléfine fluorée ayant un diamètre de particule moyen de 0,05 à 1000µm, une densité de 1,2 à 2,3 g/cm$^3$ et une teneur en fluor de 59 à 76 % en poids.

**2.** Matières à mouler thermoplastiques selon la revendication 1, pour la préparation desquelles on a mis en oeuvre le composant E) à l'état d'un mélange coagulé d'une émulsion de la polyoléfine fluorée E) à un diamètre de particule moyen de 0,05 à 20 µm et une densité de 1,2 à 1,9 g/cm$^3$ et d'une émulsion du polymère greffé B), à des proportions relatives en poids polymère greffé B)/ polyoléfine fluorée E) de 95 : 5 à 60 : 40, la quantité supplémentaire de B) étant de 0,1 à 4 parties en poids pour 100 parties en poids de A + B + C.

**3.** Matières à mouler thermoplastiques selon la revendication 1, contenant le composant E) à l'état de poudre à un

diamètre de particule moyen de 100 à 1 000 µm et à une densité de 2,0 g/$cm^3$ à 2,3 g/$cm^3$.

**4.** Matières à mouler thermoplastiques selon la revendication 1, contenant des quantités efficaces de stabilisants, de pigments, de produits auxiliaires fluidifiants, de matières de charge et matières renforçantes, d'agents de démoulage, d'agents antistatiques, ou de mélanges de ces additifs.

**5.** Matières à mouler selon la revendication 1, contenant en tant que matières renforçantes, en proportions allant jusqu'à 60 % en poids par rapport au poids de la matière à mouler, des fibres de verre.

**6.** Procédé de préparation des matières à mouler selon la revendication 1, caractérisé en ce que l'on mélange de manière connue les composants A), B), D), E) et le cas échéant C) puis on poursuit le mélange à l'état fondu ou par extrusion à des températures de 200 à 330°C dans des appareillages usuels.

**Revendications pour l'Etat contractant suivant : ES**

**1.** Procédé de préparation de matières à mouler thermoplastiques contenant

A) 30 à 97% en poids - par rapport à A + B + C - d'un polycarbonate aromatique, d'un polyestercarbonate aromatique, d'un polyester aromatique thermoplastique ou leurs mélanges,
B) 3 à 30 % en poids - par rapport à A + B + C - d'un polymère greffé de

B.1) 40 à 90 % en poids d'un caoutchouc diénique à l'état de particules, réticulé en partie au moins, à un diamètre de particule moyen $d_{50}$ de 0,05 à 2,0 µm, et

B.2) 60 à 10 % en poids de styrène, d'acrylonitrile, de méthacrylate de méthyle ou leurs mélanges, préparé par polymérisation greffée en émulsion avec un inducteur consistant en hydroperoxyde de cumène ou hydroperoxyde de tert-butyle et acide ascorbique, jusqu'à un rendement de greffage supérieur à 60 % du poids des monomères B.2, et en outre

C) 0 à 40 % en poids - par rapport à A + B + C - d'une résine thermoplastique qui consiste en

C.1) un copolymère thermoplastique de

C.1.1) 50 à 95 % en poids de styrène, d'α-méthylstyrène, d'un styrène substitué dans le noyau, de méthacrylate de méthyle ou leurs mélanges, et

C.1.2) 50 à 5 % en poids d'acrylonitrile, de méthacrylonitrile, de méthacrylate de méthyle, d'anhydride maléique, d'un maléimide substitué à l'azote ou leurs mélanges,

ou bien
C.2) un téréphtalate de polyalkylène,

D) 1 à 20 parties en poids - par rapport à A + B + C - d'un dérivé du phosphore répondant à la formule I

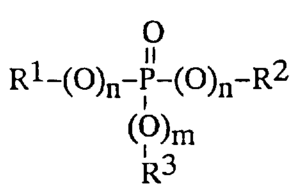

(I)

dans laquelle

$R^1$, $R^2$ et $R^3$ représentent chacun, indépendamment les uns des autres, un groupe alkyle en $C_1$-$C_8$ éventuellement halogéné ou aryle en $C_6$-$C_{20}$ éventuellement halogéné et/ou alkylé,
m est égal à 0 ou 1 et
n est égal à 0 ou 1,

E) 0,05 à 5 parties en poids pour 100 parties en poids - par rapport à A + B + C - d'une polyoléfine fluorée ayant un diamètre de particule moyen de 0,05 à 1000µm, une densité de 1,2 à 2,3 g/$cm^3$ et une teneur en fluor de 59 à 76 % en poids.

**2.** Procédé selon la revendication 1, selon lequel E) est mis en oeuvre à l'état de mélange coagulé d'une émulsion de la polyoléfine fluorée E) à un diamètre de particule moyen de 0,05 à 20 µm et une densité de 1,2 à 1,9 g/$cm^3$ et d'une émulsion du polymère greffé B), à des proportions relatives en poids polymère greffé B)/polyoléfine fluorée E) de 95 : 5 à 60 : 40, la quantité supplémentaire de B) étant de 0,1 à 4 parties en poids pour 100 parties en poids de A + B + C.

**3.** Procédé selon la revendication 1, selon lequel E) est contenu à l'état de poudre à un diamètre de particule moyen de 100 à 1 000 µm et à une densité de 2,0 g/$cm^3$ à 2,3 g/$cm^3$.

**4.** Procédé selon la revendication 1, selon lequel les matières à mouler contiennent des quantités efficaces de stabilisants, de pigments, de produits auxiliaires fluidifiants, de matières de charge et matières renforçantes, d'agents de démoulage, d'agents antistatiques ou leurs mélanges.

**5.** Procédé selon la revendication 1, selon lequel les matières à mouler thermoplastiques contiennent en tant que matières renforçantes, en proportions allant jusqu'à 60 % de leur poids, des fibres de verre.